# FASCICULE DE BREVET EUROPEEN

(11) **EP 4 624 735 B1**
(45) Date de publication et mention de la délivrance du brevet: **29.07.2026**
(21) Numéro de dépôt: 24219516.2
(22) Date de dépôt: 12.12.2024
(51) Int. Cl.: F02C 7/268, H02P 9/14, H02P 9/48

(54) **PROCEDE ET SYSTEME DE DEMARRAGE RAPIDE D'UN MOTEUR A COMBUSTION AU SEIN D'UN AERONEF MULTIMOTEUR**
VERFAHREN UND SYSTEM ZUM SCHNELLEN STARTEN EINER BRENNKRAFTMASCHINE IN EINEM MEHRMOTORIGEN FLUGZEUG
METHOD AND SYSTEM FOR QUICK START OF A COMBUSTION ENGINE WITHIN A MULTI-ENGINE AIRCRAFT

(30) Priorité: 29.03.2024 FR 2403318
(43) Date de publication de la demande: 01.10.2025
(73) Titulaire: Airbus Helicopters, 13725 Marignane Cedex (FR)
(72) Inventeur: BARTHELEMY, Romain, 13100 AIX EN PROVENCE (FR); GAZZINO, Marc, 13012 MARSEILLE (FR); AMOKRANE, Mounir, 13340 ROGNAC (FR); LOGEAIS, Jean-François, 13009 MARSEILLE (FR)
(74) Mandataire: GPI Brevets

(56) Documents cités:
- US-A1- 2017 184 032
- US-A1- 2021 071 583
- US-B2- 7 513 119

## Description

La présente invention concerne un procédé et un système de démarrage rapide d'un moteur à combustion au sein d'un aéronef multimoteur.

Un aéronef peut comprendre plusieurs moteurs à combustion pour mettre en mouvement un système mécanique, et par exemple un système mécanique mettant en rotation au moins un rotor sur un hélicoptère.

Les moteurs à combustion peuvent prendre la forme d'un turbomoteur, éventuellement à turbine libre. Un turbomoteur à turbine libre comprend un générateur de gaz muni d'un compresseur, d'une chambre de combustion et d'un ensemble de détente haute pression solidaire en rotation du compresseur. Le compresseur peut être muni d'un ou de plusieurs étages de compression. De même, l'ensemble de détente peut comprendre une ou plusieurs turbines de détente. En outre, le turbomoteur à turbine libre comporte au moins une turbine de travail basse pression dite « libre », à savoir indépendante mécaniquement en rotation du compresseur de l'ensemble de détente haute pression, mettant en rotation un arbre de puissance.

Par ailleurs, l'installation motrice comporte un système de démarrage par moteur muni d'une génératrice/démarreur. Une génératrice/démarreur comprend une machine électrique connectée mécaniquement à un ensemble mobile du moteur associé. En présence d'un turbomoteur, la machine électrique comporte un arbre solidaire en rotation du compresseur et de l'ensemble de détente haute pression du générateur de gaz.

Une telle machine électrique peut fonctionner dans un mode moteur électrique et dans un mode générateur électrique. Lorsque le mode moteur électrique est appliqué, la machine électrique transforme une énergie électrique reçue d'une source en une énergie mécanique pour participer à la mise en mouvement de l'ensemble mobile du moteur à combustion associé, par exemple durant une phase de démarrage. Lorsque le mode générateur électrique est appliqué, la machine électrique transforme une énergie mécanique prélevée sur le moteur à combustion associé en une énergie électrique pouvant être transmise à un réseau électrique de l'aéronef.

Ainsi, un aéronef à voilure tournante peut comprendre une installation motrice ayant plusieurs moteurs à combustion pour mettre en mouvement une chaîne de transmission de puissance, cette chaîne de transmission de puissance mettant notamment en rotation au moins une voilure tournante.

L'installation motrice peut éventuellement fonctionner selon un mode de fonctionnement asymétrique en mettant en veille un des moteurs durant certaines phases de fonctionnement de l'aéronef.

Sur un aéronef à voilure tournante, lors du mode asymétrique, au moins un moteur actif est régulé pour assurer la mise en rotation de la voilure tournante en développant avec son arbre de puissance une puissance motrice active non nulle. Au moins un moteur passif est en revanche mis en veille, en étant par exemple éteint ou régulé pour développer avec son arbre de puissance une puissance de ralenti inférieure à la puissance motrice active. La chambre de combustion du moteur passif peut être alimentée en carburant, ou n'est pas alimentée en carburant. Le moteur passif est en outre désynchronisé de la voilure tournante par le biais d'une roue libre.

Dans un tel mode asymétrique, si une panne survient et entraîne l'arrêt du moteur actif, le moteur en veille doit être réactivé rapidement.

Dès lors, les génératrices/démarreurs sont prévues pour obtenir un temps de démarrage raisonnable avec un niveau de disponibilité usuel lors du démarrage initial des moteurs à combustion au sol, et un temps de démarrage rapide avec un niveau de disponibilité élevé pour réactiver un moteur en veille.

La conjonction des contraintes de temps de démarrage et de la valeur de tension électrique du réseau électrique alimentant électriquement la machine électrique peuvent conduire à un système de démarrage ayant une masse non négligeable.

Le document FR3121293 décrit une installation motrice munie d'un moteur à combustion et d'un démarreur électrique. L'installation motrice a de plus une source d'énergie électrique principale qui peut par exemple comprendre une batterie électrique, et une source d'énergie électrique secondaire qui peut aussi par exemple comprendre une batterie électrique. Dès lors, un connecteur relie électriquement en série la source d'énergie électrique principale ainsi que la source d'énergie électrique secondaire au démarreur électrique durant une phase de démarrage rapide.

Le document FR3019214 décrit un système de démarrage indépendant électriquement d'un réseau de bord pour démarrer deux turbomoteurs d'un aéronef. Selon une réalisation, ce système de démarrage comporte une première machine électrique connectée à un premier turbomoteur et une deuxième machine électrique connectée à un deuxième turbomoteur. La première machine électrique est reliée électriquement à un premier convertisseur électrique de type courant continu/courant alternatif par un premier connecteur électrique et à un deuxième convertisseur de type courant continu/courant alternatif par un deuxième connecteur électrique. De même, la deuxième machine électrique est reliée électriquement au premier convertisseur par un troisième connecteur électrique et au deuxième convertisseur par un quatrième connecteur électrique. Le premier convertisseur électrique est en outre relié électriquement à une première source électrique via un premier bus à courant continu, et le deuxième convertisseur électrique est relié électriquement à une deuxième source d'énergie électrique principale via un deuxième bus à courant continu.

Le document US 2021/071583 A1 décrit un moteur comprenant un compresseur basse pression, un compresseur haute pression, une chambre de combustion, une turbine haute pression et une turbine basse pression. Ensemble, le compresseur haute pression, la turbine haute pression et l'arbre d'interconnexion associé font partie d'un ensemble haute pression. De même, le compresseur basse pression, la turbine basse pression et l'arbre d'interconnexion associé font partie d'un ensemble basse pression. De plus, le moteur comporte une première machine électrique rotative couplée mécaniquement à l'ensemble haute pression, et une seconde machine électrique rotative couplée mécaniquement à l'ensemble basse pression.

Le document US 7513119 B2 est aussi connu.

La présente invention a alors pour objet de proposer un système de démarrage et de génération électrique innovant pour un aéronef multimoteur, permettant éventuellement d'obtenir un temps de démarrage d'un moteur raisonnable avec un niveau de disponibilité usuel lors du démarrage initial des moteurs à combustion au sol, et/ou un temps de démarrage rapide avec un niveau de disponibilité élevé pour réactiver un moteur en veille lors de l'application d'un mode de fonctionnement asymétrique.

L'invention concerne ainsi un système de démarrage et de génération électrique pour un moteur principal à combustion d'un aéronef, le système de démarrage et de génération électrique comprenant une génératrice-démarreur munie d'un arbre de transmission, la génératrice-démarreur pouvant fonctionner selon un mode moteur pour mettre en mouvement un ensemble mobile principal du moteur principal avec l'arbre de transmission et un mode générateur pour générer une énergie électrique en ayant l'arbre de transmission mis en mouvement par ledit ensemble mobile principal.

La génératrice-démarreur comporte un premier bobinage et un deuxième bobinage polyphasés générant des champs magnétiques pour créer des couples moteurs respectifs mettant en mouvement conjointement l'arbre de transmission dans un mode de démarrage du mode moteur, le système de démarrage et de génération électrique comportant une première source d'énergie électrique principale reliée sur commande par une première liaison électrique au moins à un premier convertisseur électrique principal relié électriquement au premier bobinage et une deuxième source d'énergie électrique principale reliée sur commande par une deuxième liaison électrique au moins à un deuxième convertisseur électrique principal relié électriquement au deuxième bobinage.

Le premier bobinage et le deuxième bobinage polyphasés sont des ensembles de bobines polyphasés. Le premier bobinage et le deuxième bobinage polyphasés comportent donc chacun plusieurs bobines électriques.

Par suite, la génératrice-démarreur est alimentée électriquement durant le mode de démarrage par deux convertisseurs électriques réversibles de type courant continu/courant alternatif, directement à savoir sans passer par un organe de connexion/déconnexion électrique. Les deux convertisseurs électriques sont connectés sur commande, via des organes de connexion/déconnexion électriques, à deux sources électriques distinctes et indépendantes. Ces sources électriques peuvent être déjà présentes sur un aéronef usuel, et peuvent ne pas induire un surcroît de masse.

En outre, cette utilisation de deux bobinages alimentés électriquement en parallèle, voire indépendamment suivant la variante, permet de sommer les couples électromagnétiques produits pour l'entraînement de l'arbre de transmission. Dès lors, l'arbre de transmission peut développer une puissance mécanique importante. Avec une telle puissance mécanique importante, le démarrage du moteur principal peut être rapide, à savoir un démarrage obtenu en moins de 10 secondes par exemple. Un tel démarrage rapide est notamment avantageux en vol lorsque le moteur principal est en veille au sein d'un aéronef multimoteur, par exemple lorsque le mode asymétrique décrit précédemment est appliqué.

En cas de défaut sur une des lignes d'alimentation électrique alimentant électriquement le premier bobinage et le deuxième bobinage, l'autre ligne d'alimentation électrique et l'autre bobinage permettent d'obtenir une puissance mécanique suffisante pour démarrer le moteur principal dans un mode dégradé. Un tel défaut peut être un court-circuit électrique franc, et par exemple peut résulter d'un court-circuit directement entre les phases d'un bobinage. Le système est donc sécurisé et offre la possibilité de démarrer le moteur avec un niveau de disponibilité élevé, notamment en vol.

En effet, chaque bobinage est dimensionné pour obtenir seul, et même en présence d'un couple de freinage généré par l'autre bobinage dû à un courant de court-circuit par exemple entre les phases de cet autre bobinage, une puissance mécanique permettant un démarrage du moteur principal.

Ainsi, le système de démarrage et de génération électrique sollicite deux sources d'énergie électriques distinctes, ségrégées, éventuellement de natures différentes et/ou déjà utilisées par ailleurs sur l'aéronef, pour alimenter électriquement lors d'un démarrage une génératrice-démarreur. Cette architecture permet d'obtenir un compromis temps de redémarrage / masse / fiabilité intéressant pour les fonctions visées.

La machine de démarrage et de génération électrique peut être un démarreur pur ne pouvant fonctionner que selon le mode moteur, par exemple pour démarrer un moteur puissant nécessitant une puissance mécanique importante.

Le système de démarrage et de génération électrique peut aussi générer de l'énergie électrique durant un mode producteur d'énergie électrique en convertissant une énergie mécanique prélevée sur le moteur principal en fonctionnement. La génératrice-démarreur peut alors devenir une source de tension électrique régulée, par exemple de 28 Volts. Dans ce mode de fonctionnement, les deux convertisseurs électriques sont sollicités en parallèle afin d'utiliser l'ensemble du volume de cuivre disponible, à savoir celui des premier et deuxième bobinages, et ainsi optimiser la masse du système.

Eventuellement, les deux convertisseurs électriques sont sollicités pour respectivement alimenter électriquement deux réseaux électriques distincts. Selon un exemple, les deux convertisseurs électriques alimentent électriquement un réseau électrique normal et un réseau électrique de secours.

Selon un autre exemple, les deux convertisseurs électriques alimentent électriquement avec des tensions électriques différentes deux réseaux distincts. Par exemple un convertisseur électrique alimente un réseau électrique ayant une tension électrique de 28 Volts et l'autre convertisseur électrique alimente un réseau électrique ayant une tension électrique de 56 Volts par exemple, pour alimenter des actionneurs de commande de vol par exemple.

Le système de démarrage et de génération électrique peut en outre comprendre une ou plusieurs des caractéristiques qui suivent.

Selon une possibilité, le premier bobinage et le deuxième bobinage peuvent être différents, par exemple en présentant des nombres de tours d'enroulements différentes ce qui génère des inductances différentes.

Ainsi, chaque bobinage peut être adapté à la source d'énergie électrique principale associée, en particulier si elles sont différentes et/ou ont des caractéristiques, par exemple des tensions électriques, différentes.

Selon une possibilité compatible avec les précédentes, la première source d'énergie électrique principale peut ne pas être régulée en tension électrique et la deuxième source d'énergie électrique principale peut être régulée en tension électrique ou la première source d'énergie électrique principale et la deuxième source d'énergie électrique principale peuvent être régulées à des tensions électriques différentes.

Ces deux alternatives permettent de piloter le couple moteur transmis à la machine électrique principale.

Selon une possibilité compatible avec les précédentes, la première source d'énergie électrique principale peut comporter au moins une batterie électrique ou une pile thermique ou une supercapacité.

La source d'énergie électrique principale peut comporter plusieurs de ces moyens de stockage d'énergie électrique non régulés, ce qui permet de ne pas avoir à surdimensionner un moyen de stockage d'énergie électrique pour supporter le démarrage.

Une telle batterie électrique est usuellement présente sur un aéronef.

Selon une possibilité compatible avec les précédentes, la deuxième source d'énergie électrique principale peut comporter un générateur électrique régulé en tension électrique et configuré pour être mécaniquement mis en mouvement par un système mécanique.

Un tel générateur électrique est usuellement présent sur un aéronef.

Selon une première alternative de la génératrice/démarreur, cette génératrice/démarreur peut comporter une machine électrique ayant un stator muni du premier bobinage et du deuxième bobinage qui sont polyphasés ainsi qu'à neutre flottant et galvaniquement isolés l'un de l'autre, la machine électrique comportant un rotor à aimants permanents enterrés avec réluctance variable solidaire en rotation de l'arbre de transmission.

L'utilisation de deux bobinages alimentés électriquement en parallèle permet de sommer les couples électromagnétiques produits sur le rotor à aimants permanents enterrés avec réluctance variable. En cas de défaut sur une des lignes d'alimentation électrique alimentant électriquement les deux bobinages statoriques, l'utilisation d'un rotor à aimants permanents enterrés avec réluctance variable permet de limiter le courant de court-circuit éventuellement produit. Une telle machine électrique permet de réduire les courants de court-circuit à haute vitesse, et donc limite le couple de freinage produit et l'échauffement de la machine électrique en cas de court-circuit interne. Dès lors, l'autre ligne d'alimentation électrique et l'autre bobinage statorique peuvent permettre d'obtenir une puissance mécanique suffisante pour démarrer le moteur principal dans un mode dégradé. La génératrice/démarreur est donc robuste et présente un niveau de fiabilité élevé.

Selon une deuxième alternative de la génératrice/démarreur, cette génératrice/démarreur peut comporter une double machine électrique à excitations séparées, la double machine électrique à excitations séparées comportant un stator muni du premier bobinage et du deuxième bobinage, la double machine électrique à excitations séparées comportant un rotor muni de deux bobinages rotoriques reliés électriquement à un collecteur électrique à balais.

Les deux bobinages rotoriques coopèrent respectivement avec les premier et deuxième bobinages du stator. Un cas de court-circuit interne est géré en coupant l'excitation concernée, le couple de freinage résultant du court-circuit étant alors supprimé. La génératrice/démarreur présente donc un niveau de fiabilité élevé.

Selon une troisième alternative de la génératrice/démarreur, cette génératrice/démarreur peut comporter un démarreur à aimant et une machine électrique fonctionnant en mode générateur et en mode moteur, le démarreur à aimant étant muni d'un premier stator ayant le premier bobinage et d'un premier rotor qui est relié mécaniquement à l'arbre de transmission par une roue libre, la machine électrique comprenant un deuxième stator muni du deuxième bobinage et d'un deuxième rotor solidaire de l'arbre de transmission, la machine électrique pouvant être une machine électrique à excitation séparée ou asynchrone.

Ainsi, le démarreur est sollicité uniquement lors d'une phase de démarrage, alors que la machine électrique est sollicitée aussi bien durant une phase de démarrage que durant le mode de production d'énergie électrique. La roue libre permet d'isoler le démarreur de la machine électrique en cas de court-circuit au sein d'un de ces organes. En présence d'une machine électrique à excitation séparée, la coupure de l'excitation peut éliminer un éventuel court-circuit. La génératrice/démarreur présente donc un niveau de fiabilité élevé.

Selon une quatrième alternative de la génératrice/démarreur, cette génératrice/démarreur peut comporter une double machine électrique asynchrone comportant un stator muni du premier bobinage et du deuxième bobinage.

Le court-circuit interne est géré en prenant en compte les tensions électriques rémanentes internes de la machine.

Selon une cinquième alternative de la génératrice/démarreur, cette génératrice/démarreur peut comporter une machine électrique à excitation séparée comprenant un stator ayant un bobinage parmi le premier bobinage et le deuxième bobinage et une machine électrique asynchrone comprenant un stator ayant l'autre bobinage parmi le premier bobinage et le deuxième bobinage.

Quelle que soit la nature de la génératrice/démarreur, selon une possibilité compatible avec les précédentes, le système de démarrage et de génération électrique peut comporter un gestionnaire configuré pour :
- dans un mode de démarrage, alimenter électriquement le premier bobinage via le premier convertisseur électrique principal avec au moins la première source d'énergie électrique principale, alimenter électriquement le deuxième bobinage via le deuxième convertisseur électrique principal avec au moins la deuxième source d'énergie électrique principale,
- dans un mode de veille, alimenter un des premier bobinage et deuxième bobinage avec la deuxième source d'énergie électrique principale, maintenir en charge la première source d'énergie électrique principale via une liaison électrique transverse reliée à la deuxième liaison électrique,
- dans un mode producteur d'énergie électrique, connecter électriquement en parallèle le deuxième convertisseur électrique principal et le premier convertisseur électrique principal pour alimenter électriquement la première source d'énergie électrique principale.

Le terme « gestionnaire » désigne un système permettant de réaliser les diverses actions précitées. Le gestionnaire peut comprendre au moins un cœur électrique, un équipement électronique de la génératrice/démarreur, un calculateur, des contacteurs pilotés pour ouvrir ou fermer une connexion électrique, etc.

Selon une possibilité compatible avec les précédentes, la deuxième liaison électrique peut comprendre un bus principal, et le gestionnaire peut comporter :
- un contrôleur,
- un premier contacteur principal commandé par le contrôleur et agencé sur la première liaison électrique,
- un deuxième contacteur principal commandé par le contrôleur et agencé sur la deuxième liaison électrique entre le bus principal et le deuxième convertisseur électrique principal.

Le premier contacteur et le deuxième contacteur permettent de connecter électriquement, si besoin, les convertisseurs électriques principaux aux sources d'énergie électrique principales.

Eventuellement, le gestionnaire peut comporter :
- un troisième contacteur principal commandé par le contrôleur et agencé entre le bus principal et une connexion configurée pour être reliée électriquement à une liaison électrique complémentaire d'un circuit électrique supplémentaire,
- un quatrième contacteur principal commandé par le contrôleur et agencé sur une liaison électrique transverse, la liaison électrique transverse s'étend de la deuxième liaison électrique jusqu'à la première liaison électrique entre le premier contacteur principal et la première source d'énergie électrique principale,
- un cinquième contacteur principal commandé par le contrôleur et agencé sur une ligne électrique reliant la première liaison électrique et la deuxième liaison électrique entre d'une part le deuxième contacteur principal et le deuxième convertisseur électrique principal et d'autre part entre le premier contacteur principal et le premier convertisseur électrique principal.

Ces divers contacteurs permettent de mettre en œuvre les divers modes de fonctionnement précitées.

Selon une variante, le troisième contacteur principal est agencé sur la deuxième liaison électrique, un contacteur additionnel pouvant être agencé entre le troisième contacteur principal et la deuxième source d'énergie électrique.

Selon une autre variante permettant de mettre en parallèle les sources d'énergie électrique principales, une liaison électrique additionnelle relie la première liaison électrique et la deuxième liaison électrique. Cette liaison électrique additionnelle est connectée à la deuxième liaison électrique entre la deuxième source d'énergie électrique principale et le bus principal, et à la première liaison électrique entre la première source d'énergie électrique principale et le premier contacteur principal. En outre, la première liaison électrique comporte un contacteur additionnel entre sa connexion à la liaison électrique additionnelle et sa connexion à la liaison électrique transverse.

Selon une possibilité compatible avec les précédentes, la première source d'énergie électrique principale et la deuxième source d'énergie électrique principale peuvent présenter des tensions électriques différentes.

L'invention vise en outre un aéronef muni d'un moteur principal à combustion et d'au moins un moteur supplémentaire à combustion connectés à un système mécanique mettant en mouvement au moins une voilure tournante ou un rotor ou une hélice, le moteur supplémentaire étant connecté à une machine électrique supplémentaire pouvant fonctionner selon un mode moteur pour mettre en mouvement un ensemble mobile supplémentaire du moteur supplémentaire et un mode générateur pour générer une énergie électrique en étant mis en mouvement par ledit ensemble mobile supplémentaire, la machine électrique supplémentaire étant reliée électriquement à un convertisseur électrique supplémentaire qui est relié par une liaison électrique supplémentaire à une source d'énergie électrique supplémentaire.

Cet aéronef comporte un système de démarrage et de génération électrique du type décrit précédemment pour le moteur principal.

Selon une possibilité, le système mécanique pouvant comprendre une boîte de transmission de puissance connectée au moteur principal et au moteur supplémentaire, la deuxième source d'énergie électrique principale peut être mise en mouvement par la boîte de transmission de puissance.

La boîte de transmission de puissance peut être reliée mécaniquement à une voilure tournante, et/ou une hélice, et/ou un rotor de contrôle du mouvement en lacet par exemple.

Par ailleurs, l'invention vise aussi un procédé de démarrage d'un moteur à combustion et de génération d'énergie électrique avec un système de démarrage et de génération électrique du type décrit précédemment.

Ce procédé comporte :
- un mode de démarrage comportant les étapes suivantes : alimenter électriquement le premier bobinage via le premier convertisseur électrique principal avec au moins la première source d'énergie électrique principale, alimenter électriquement le deuxième bobinage via le deuxième convertisseur électrique principal avec au moins la deuxième source d'énergie électrique principale,
- un mode de veille comportant les étapes suivantes : alimenter un des premier bobinage et deuxième bobinage avec la deuxième source d'énergie électrique principale et maintenir en charge la première source d'énergie électrique principale via une liaison électrique transverse reliée à la deuxième liaison électrique,
- un mode producteur d'énergie électrique comportant les étapes suivantes : connecter électriquement en parallèle le deuxième convertisseur électrique principal et le premier convertisseur électrique principal et les relier à la première source d'énergie électrique principale.

L'invention et ses avantages apparaîtront avec plus de détails dans le cadre de la description qui suit avec des exemples donnés à titre illustratif en référence aux figures annexées qui représentent :
la figure 1, un système de démarrage et de génération électrique pour un moteur principal à l'arrêt,
la figure 2, un exemple de génératrice-démarreur selon l'invention,
la figure 3, un exemple de génératrice-démarreur selon l'invention,
la figure 4 un exemple de génératrice-démarreur selon l'invention.
La figure 5, le système de démarrage et de génération électrique de la figure 1 lors d'un mode de démarrage,
la figure 6, le système de démarrage et de génération électrique de la figure 1 lors d'un mode de veille,
la figure 7, le système de démarrage et de génération électrique de la figure 1 lors d'un mode producteur d'énergie électrique,
la figure 8, un système de démarrage et de génération électrique avec des sources d'énergie électrique en parallèle lors d'un mode de veille,
la figure 9, le système de démarrage et de génération électrique de la figure 8 lors d'un mode de démarrage, et
la figure 10, le système de démarrage et de génération électrique de la figure 8 lors d'un mode producteur d'énergie électrique,

Les éléments présents dans plusieurs figures distinctes sont affectés d'une seule et même référence.

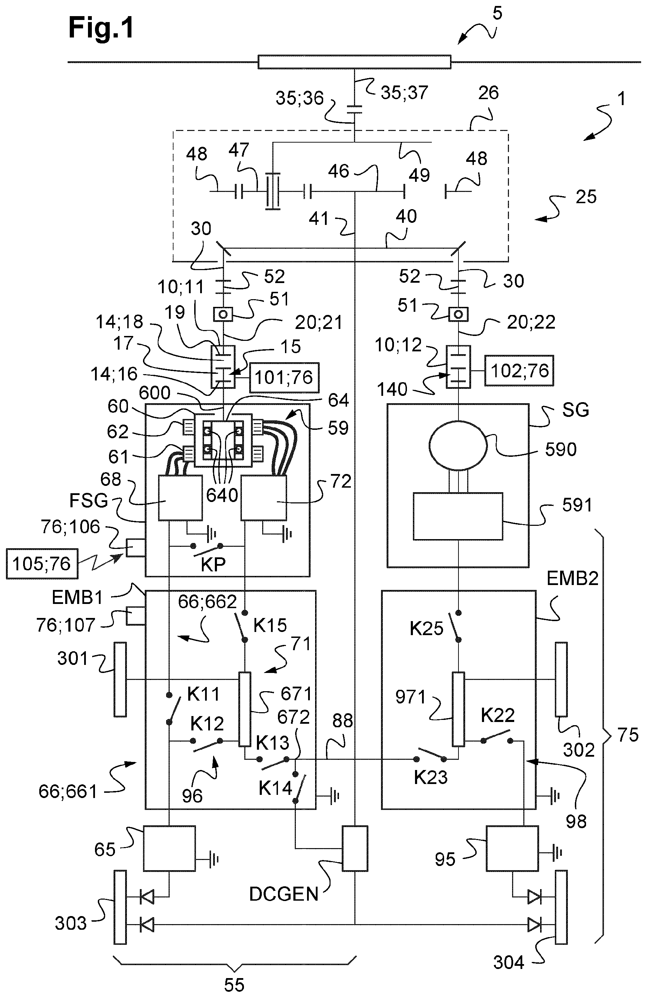

La figure 1 présente un système 55 de démarrage et de génération électrique pour un moteur principal 11 à combustion d'un aéronef 1.

Un tel aéronef 1 comprend ainsi une installation motrice munie du moteur principal 11, voire d'au moins un moteur supplémentaire 12 à combustion. La référence 10 désigne n'importe quel moteur à combustion, les références 11, 12 désignant respectivement un moteur principal et un moteur supplémentaire si besoin pour identifier un moteur 10 spécifique.

Le moteur principal 11 et le ou les moteurs supplémentaires 12 éventuels peuvent être pilotés par des systèmes de régulation moteur 101, 102 respectifs. Chaque système de régulation moteur 101, 102 peut être d'un type usuel, et peut ainsi comprendre un doseur de carburant et divers senseurs reliés à un calculateur moteur, le calculateur moteur étant configuré pour piloter le doseur de carburant au moins en fonction d'un signal émis par un ou plusieurs senseurs. Les systèmes de régulation moteur ne sont pas décrits plus dans le détail pour ne pas alourdir la présente description, ces systèmes de régulation moteur étant bien connus de l'homme du métier.

Selon un exemple, au moins un moteur 10 peut être un turbomoteur. Par exemple, le moteur principal 11 comporte un turbomoteur muni d'un générateur de gaz 15. Le générateur de gaz 15 possède au moins une turbine de compression 16, une chambre de combustion 17 dans laquelle est injecté le carburant et au moins une turbine de détente 18 liée en rotation à la ou aux turbines de compression 16. La ou les turbines de compression 16, sont reliées mécaniquement en rotation à la ou aux turbines de détente 18 pour former un ensemble mobile principal 14. De plus, le turbomoteur peut comporter au moins une turbine libre 19 qui met en mouvement directement ou indirectement un arbre de puissance 21 du moteur.

De même, le moteur supplémentaire 12 peut être un turbomoteur muni d'un ensemble mobile supplémentaire 140 et d'un arbre de puissance 22. La référence 20 désigne n'importe quel arbre de puissance, les références 21, 22 désignant des arbres de puissance particuliers respectivement des deux moteurs 11 ,12.

Indépendamment du type des moteurs, chaque moteur 10 comporte donc un arbre de puissance 20 et un ensemble mobile 14, 140.

Par ailleurs, le ou les arbres de puissance 20 sont connectés mécaniquement à un système mécanique 25 pour le mettre en mouvement. Par exemple, le système mécanique 25 peut être connecté à au moins un organe aérodynamique tournant 5. Cet organe aérodynamique tournant 5 peut être notamment une voilure tournante selon l'exemple, un rotor de contrôle du mouvement en lacet ou une hélice.

A titre illustratif, le système mécanique 25 peut être muni d'une boîte de transmission de puissance 26 qui est mécaniquement interposée entre les moteurs 10 et la voilure tournante 5. Par exemple, la boîte de transmission de puissance 26 comporte un mât rotor 35, muni d'un ou de plusieurs arbres 36, 37 colinéaires reliés à l'organe aérodynamique tournant 5. La boîte de transmission de puissance 26 peut être munie d'un arbre d'entrée 30 par moteur 10 et d'engrenages divers agencés entre les arbres d'entrée 30 et le mât rotor 35. Selon un exemple donné à titre illustratif, chaque arbre d'entrée 30 est en prise sur une grande roue 40. Cette grande roue 40 est alors mécaniquement reliée par un arbre interne 41 à un pignon planétaire 46 d'un étage de réduction de puissance 45. Des pignons satellites 47 sont alors en prise d'une part sur le pignon planétaire 46 et sur une couronne dentée 48 immobile dans le référentiel de l'aéronef 1. De plus, les pignons satellites 47 sont portés par un porte-satellites 49 solidaire en rotation du mât rotor 35. Dès lors, chaque arbre d'entrée 30 est entraîné en rotation par un arbre de puissance 20 d'un moteur 10 directement ou via une chaîne mécanique d'entrée respective. Le système mécanique 25, et selon l'exemple illustré une chaîne mécanique d'entrée, peuvent comprendre au moins une roue libre 51, et/ou au moins un arbre de liaison 52, et/ou au moins un connecteur autorisant des désalignements...

La littérature décrit divers types de boîtes de transmission de puissance et diverses chaines cinématiques, l'exemple décrit étant donné uniquement à titre illustratif.

Indépendamment de la nature du système mécanique 25 et de la présence ou non d'un ou de plusieurs moteurs supplémentaires 12, le système 55 de démarrage et de génération électrique comprend une génératrice/démarreur FSG pouvant fonctionner selon un mode moteur MOT pour mettre en mouvement l'ensemble mobile principal 14 du moteur principal 11 et un mode générateur GEN pour générer une énergie électrique en étant mis en mouvement par ledit ensemble mobile principal 14.

Ainsi, la génératrice/démarreur FSG comporte un arbre de transmission 600 connecté à l'ensemble mobile principal 14.

En outre, la génératrice-démarreur FSG comporte un premier bobinage 61 et un deuxième bobinage 62 polyphasés. Les bobines des premier bobinage 61 et deuxième bobinage 62 sont reliés électriquement et respectivement à un premier convertisseur électrique principal 68 et à un deuxième convertisseur électrique principal 72.

Lorsque le premier bobinage 61 et le deuxième bobinage 62 sont alimentés électriquement, le premier bobinage 61 et le deuxième bobinage 62 créent des champs magnétiques mettant conjointement en rotation l'arbre de transmission 600. A l'inverse, durant le mode générateur GEN, l'arbre de transmission 600 est mis en mouvement par l'ensemble mobile principal 14 ce qui permet de générer de l'énergie électrique.

Une telle génératrice/démarreur FSG permet la mise en œuvre de divers modes de fonctionnement. Ces mode de fonctionnement incluent : i) un mode de démarrage MODRAP durant lequel le premier bobinage 61 et le deuxième bobinage 62 sont alimentés électriquement pour entraîner conjointement en rotation l'arbre de transmission 600, ii) un mode de veille MODVEIL durant lequel un seul des premier bobinage 61 et deuxième bobinage 62 est alimenté électriquement pour entraîner en rotation l'arbre de transmission 600, iii) un mode producteur d'énergie MODPROD durant lequel le premier bobinage 61 et le deuxième bobinage 62 génèrent une énergie électrique lorsque l'arbre de transmission 600 est entraîné en rotation par le moteur principal 11, via l'ensemble mobile principal 14.

Les figures 1 à 4 illustrent diverses réalisations d'une génératrice/démarreur FSG.

Selon la figure 1, la génératrice/démarreur FSG comporte une machine électrique 59 ayant un stator 60 muni du premier bobinage 61 et du deuxième bobinage 62. Le premier bobinage 61 et le deuxième bobinage 62 sont par exemple triphasés, à neutre flottants et galvaniquement isolés l'un de l'autre. En outre, la machine électrique 59 comporte un rotor 64 à aimants permanents 640 enterrés avec réluctance variable solidaire de l'arbre de transmission 600. Les aimants permanents 640 sont noyés dans le rotor 64.

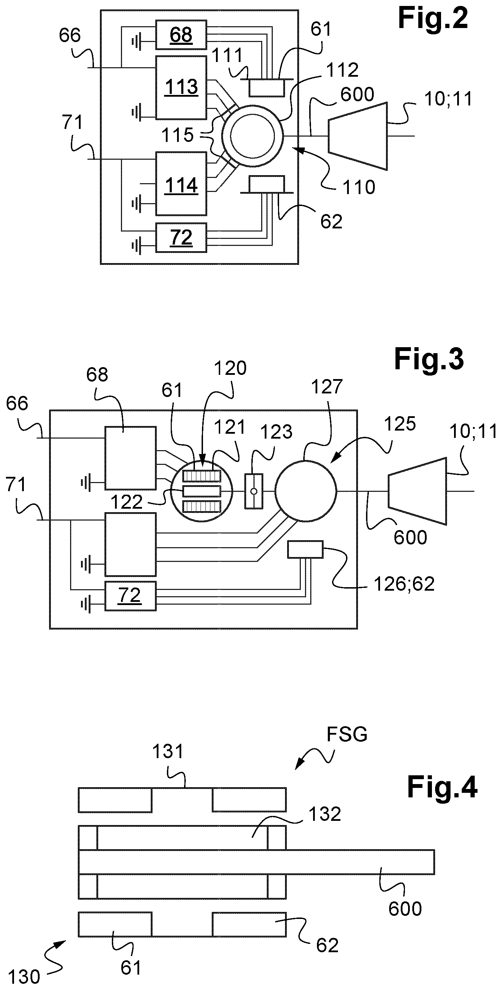

Selon l'exemple schématique de la figure 2, la génératrice/démarreur FSG comporte une double machine électrique à excitations séparées 110. Cette double machine électrique à excitations séparées 110 comporte un stator 111 muni du premier bobinage 61 et du deuxième bobinage 62. De plus, la double machine électrique à excitations séparées 110 comporte un rotor 112 muni de deux bobinages rotoriques en vis-à-vis du premier bobinage 61 et du deuxième bobinage 62. Les deux bobinages rotoriques sont reliés électriquement par un collecteur électrique à balais 115 à deux convertisseurs additionnels 113, 114 en parallèle électriquement et respectivement des premier et deuxième convertisseurs principaux 68, 72.

Selon l'exemple schématique de la figure 3, la génératrice/démarreur FSG comporte un démarreur à aimant 120 usuel et une machine électrique 125 fonctionnant en mode générateur et en mode moteur. Le démarreur à aimant 120 est alors muni d'un premier stator 121 ayant le premier bobinage 61 et d'un premier rotor 122 muni d'au moins un aimant permanent et relié mécaniquement à l'arbre de transmission 600 notamment par une roue libre 123, voire via la machine électrique 125. Cette machine électrique 125 comprend un deuxième stator 126 muni du deuxième bobinage 62 et d'un deuxième rotor 127 solidaire de l'arbre de transmission 600, la machine électrique 125 pouvant être une machine électrique à excitation séparée du type de la figure 2 ou asynchrone.

Durant le mode de démarrage MODRAP, le démarreur à aimant 120 et la machine électrique 125 mettent conjointement en mouvement l'arbre de transmission 600. En cas de panne de l'un de ces deux organes, l'autre organe assure le démarrage.

Durant le mode de veille MODVEIL, seule le machine électrique 125 est par exemple utilisée pour mettre en mouvement l'arbre de transmission 600.

Durant le mode producteur d'énergie MODPROD, seule la machine électrique 125 produit de l'énergie électrique. Le démarreur à aimant 120 est alors désolidarisé de l'arbre de transmission 600 par la roue libre 123.

Une variante de cette réalisation comporte une machine électrique à excitation séparée comprenant un stator ayant un bobinage parmi le premier bobinage et le deuxième bobinage et une machine électrique asynchrone comprenant un stator ayant l'autre bobinage parmi le premier bobinage et le deuxième bobinage.

Selon l'exemple schématique de la figure 4, la génératrice/démarreur FSG comporte une double machine électrique asynchrone 130. Cette double machine électrique asynchrone 130 comporte un stator 131 muni du premier bobinage 61 et du deuxième bobinage 62. De plus, la double machine électrique asynchrone 130 comporte un rotor 132 solidaire de l'arbre de transmission 600. Ce rotor 132 peut être du type connu sous l'expression « cage d'écureuil ».

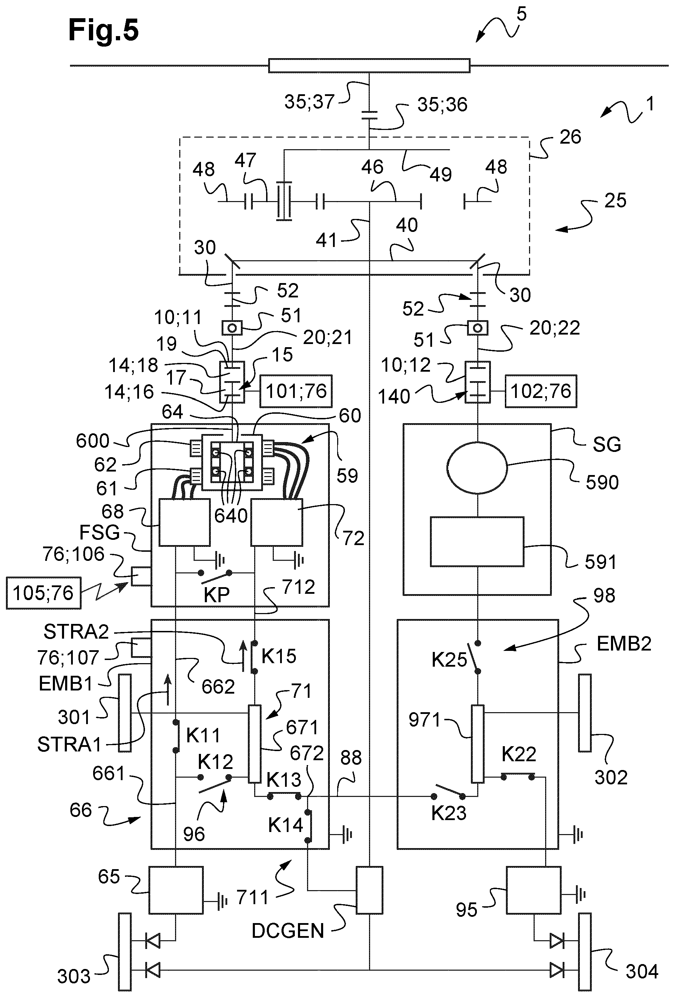

Quelle que soit la réalisation de la génératrice/démarreur FSG et en référence à la figure 5 par exemple, le système 55 peut comprendre un circuit supplémentaire comprenant une machine électrique supplémentaire SG, par exemple du même type que la machine électrique principale ou d'un type usuel, connectée au moteur supplémentaire 12. Cette machine électrique supplémentaire SG peut comprendre une machine électrique supplémentaire 590 reliée à un convertisseur supplémentaire 591. Le convertisseur supplémentaire 591 peut être connecté par une liaison électrique supplémentaire 98 à une source d'énergie électrique supplémentaire 95. Par exemple, la source d'énergie électrique supplémentaire 95 comporte au moins une batterie électrique ou une pile thermique ou une surcapacité. Eventuellement, la source d'énergie électrique supplémentaire 95 est reliée à un réseau électrique de bord essentiel supplémentaire 304 alimentant électriquement un ou des consommateurs.

De manière générale, les expressions « liaison électrique » et « ligne électrique » désignent des ensembles pouvant comprendre au moins un fil ou une piste électrique, au moins un contacteur électrique, au moins un bus électrique, etc.

Par exemple, la liaison électrique supplémentaire 98 comporte un cœur électrique supplémentaire EMB2. Ce cœur supplémentaire EMB2 comporte un bus additionnel 971 relié par un premier contacteur supplémentaire K25 au convertisseur supplémentaire 591, et par un deuxième contacteur supplémentaire K22 à la source d'énergie électrique supplémentaire 95. Le bus additionnel 971 peut être lié à une liaison électrique complémentaire 88 reliée au circuit électrique coopérant avec la génératrice/démarreur FSG. Cette liaison électrique complémentaire 88 est munie d'un troisième contacteur supplémentaire K23. Enfin, le bus additionnel 971 peut être lié à un réseau électrique secondaire 302 de l'aéronef 1. Les contacteurs supplémentaires K22, K23, et K25 sont pilotés par une électronique usuelle du cœur électrique supplémentaire EMB2.

Quelle que soit la réalisation de la génératrice/démarreur FSG et indépendamment de la présence éventuelle du circuit supplémentaire, le système 55 de démarrage et de génération électrique comporte une première source d'énergie électrique principale 65. La première source d'énergie électrique principale 65 est reliée sur commande par une première liaison électrique 66 au moins au premier convertisseur électrique principal 68. Eventuellement, la première source d'énergie électrique principale 65 est reliée à un réseau électrique de bord essentiel principal 303 alimentant électriquement un ou des consommateurs.

De plus, le système 55 de démarrage et de génération électrique comporte une deuxième source d'énergie électrique principale DCGEN. La deuxième source d'énergie électrique principale DCGEN est reliée sur commande par une deuxième liaison électrique 71 au moins au deuxième convertisseur électrique principal 72. Eventuellement, la deuxième source d'énergie électrique principale DCGEN est reliée aux deux réseaux électriques de bord essentiel principal et supplémentaire 303, 304.

Par exemple, la deuxième source d'énergie électrique principale DCGEN est régulée en tension électrique. Ainsi, la deuxième source d'énergie électrique principale DCGEN peut comporter un générateur électrique en prise sur le système mécanique 25, et possiblement sur la boîte de transmission de puissance 26 voire sur un arbre solidaire de la grande roue 40 selon l'exemple illustré.

Eventuellement la première source d'énergie électrique principale 65 n'est pas régulée en tension électrique. Par exemple, la première source d'énergie électrique principale 65 comporte une batterie électrique ou une pile thermique ou une supercapacité.

Alternativement, la première source d'énergie électrique principale 65 et la deuxième source d'énergie électrique principale DCGEN peuvent être régulées à des tensions électriques différentes.

La première liaison électrique 66 et la deuxième liaison électrique 71 peuvent passer par un cœur électrique principal EMB1.

Selon un autre aspect, le système 55 de démarrage et de génération électrique peut comporter un gestionnaire 75 configuré pour appliquer un procédé de démarrage d'un moteur à combustion et de génération d'énergie électrique de l'invention.

Le gestionnaire 75 peut comporter un contrôleur 76. Le contrôleur 76 peut comprendre au moins un organe de traitement pour appliquer le procédé de l'invention, par le biais d'un programme logiciel, d'un circuit logique ou d'un équivalent. Au moins un organe de traitement peut comprendre un des éléments suivants : un calculateur dédié ou non à cette application, une première électronique 107 du cœur électrique principal EMB1, une deuxième électronique 106 de la génératrice/démarreur FSG, et/ou un calculateur d'un système de régulation moteur 101, 102.

En outre, le gestionnaire 75 peut comporter une interface homme-machine 105 permettant à un pilote de l'aéronef 1 de sélectionner le mode fonctionnement à appliquer, parmi par exemple un mode de démarrage MODRAP, un mode de veille MODVEIL, voire un mode producteur d'énergie électrique MODPROD. Par exemple, cette interface homme-machine 105 est en liaison filaire ou non filaire avec le contrôleur 76. Eventuellement, cette interface homme-machine 105 peut comprendre un écran à dalle tactile, un bouton, un clavier, etc.

Eventuellement, le gestionnaire 75 peut comporter au moins un senseur de fonctionnement surveillant un fonctionnement de la machine électrique principale FSG et transmettant un signal de mesure au contrôleur 76. Par exemple, ledit au moins un senseur de fonctionnement comporte des capteurs de positions, de mesure de courant électrique, et de mesure de température. La redondance et la dissimilarité de ces capteurs peuvent permettre d'assurer le fonctionnement nominal de la machine électrique principale FSG en cas de défaillance de l'un ou plusieurs d'entre eux.

Par ailleurs, le contrôleur 76 peut exécuter des instructions pour piloter le premier convertisseur électrique principal 68 et le deuxième convertisseur électrique principal 72 en fonction du mode appliqué. En mode moteur, au moins un des premier et deuxième convertisseurs électriques principaux 68,72 génère une tension électrique polyphasée d'amplitude et de fréquence variables pilotées pour assurer le contrôle du couple moteur produit. La première source d'énergie électrique principale 65 et la deuxième source d'énergie électrique principale DCGEN peuvent générer des valeurs de tension électriques distinctes ce qui induit que le pilotage des premier et deuxième convertisseurs électriques principaux 68,72 n'est alors pas synchrone. En mode générateur cependant, les premier et deuxième convertisseurs électriques principaux 68,72 sont utilisés en parallèle et sont synchronisés.

En outre, le gestionnaire 75 peut comporter un premier contacteur principal K11 commandé par le contrôleur 76 et agencé sur la première liaison électrique 66 pour ouvrir ou fermer électriquement cette première liaison électrique 66. Par exemple, la première liaison électrique 66 comporte une première liaison filaire amont 661 qui s'étend de la première source d'énergie électrique principale 65 au premier contacteur principal K11, et une première liaison filaire aval 662 qui s'étend du premier contacteur principal K11 au premier convertisseur électrique principal 68. Les termes « amont et « aval » sont utilisés pour distinguer des tronçons électriques d'une liaison selon un sens choisi par commodité.

En outre, le gestionnaire 75 peut comporter un deuxième contacteur principal K15 commandé par le contrôleur 76 et agencé sur la deuxième liaison électrique 71 pour ouvrir ou fermer électriquement cette deuxième liaison électrique 71. Par exemple, la deuxième liaison électrique 71 comporte une deuxième liaison filaire amont 711 qui s'étend de la deuxième source d'énergie électrique principale DCGEN au deuxième contacteur principal K15, et une deuxième liaison filaire aval 712 qui s'étend du deuxième contacteur principal K15 au deuxième convertisseur électrique principal 72. Eventuellement, la deuxième liaison filaire amont 711 comporte un bus principal 671. Le bus principal 671 est relié au deuxième contacteur principal K15, voire à une connexion de la première liaison filaire aval 662 qui est elle-même reliée à un réseau électrique de bord secondaire 301.

En outre, le gestionnaire 75 peut comporter :
- un troisième contacteur principal K13 commandé par le contrôleur 76 et agencé entre le bus principal 671 et une connexion 672 configurée pour être reliée électriquement à la liaison électrique complémentaire 88,
- un quatrième contacteur principal K12 commandé par le contrôleur 76 et agencé sur une liaison électrique transverse 96, la liaison électrique transverse 96 s'étendant de la deuxième liaison électrique 71 jusqu'à la première liaison électrique 66 entre le premier contacteur principal K11 et la première source d'énergie électrique principale 65,
- un cinquième contacteur principal KP commandé par le contrôleur 76 et agencé sur une ligne électrique reliant la première liaison électrique 66 et la deuxième liaison électrique 71 entre d'une part le deuxième contacteur principal K15 et le deuxième convertisseur électrique principal 72 et d'autre part entre le premier contacteur principal K11 et le premier convertisseur électrique principal 68, soit entre la première liaison filaire aval 662 et la deuxième liaison filaire aval 712,
- un sixième contacteur K14.

Les divers contacteurs évoqués peuvent être d'un type usuel afin d'ouvrir ou fermer une ligne électrique, et peuvent être commandés de manière usuelle par le contrôleur 76.

Par exemple, le premier contacteur principal K11, le deuxième contacteur principal K15, le troisième contacteur principal K13, le quatrième contacteur principal K12 et le sixième contacteur K14 appartiennent au cœur électrique principal EMB1 et peuvent être pilotés par son électronique 107, alors que le cinquième contacteur principal KP appartient à la génératrice/démarreur FSG et peut être piloté par son électronique 106.

Selon la première variante de la figure 5, la première liaison filaire aval 662 comporte uniquement une liaison filaire reliée à la première source d'énergie électrique principale 65, au premier contacteur principal K11, et à la liaison électrique transverse 96. En outre, la deuxième liaison filaire amont 711 comporte le troisième contacteur principal K13 et le sixième contacteur K14, ce sixième contacteur K14 étant agencé entre la deuxième source d'énergie électrique DCGEN et le troisième contacteur principal K13.

Les figures 5 à 7 illustrent divers modes de fonctionnement de cette première variante du système 55 de démarrage et de génération électrique de l'invention.

La figure 5 illustre le système 55 de démarrage et de génération électrique de la première variante lors d'un mode de démarrage MODRAP. Le contrôleur 76 est configuré, durant une étape STPA1, pour alimenter électriquement le premier bobinage 61 via le premier convertisseur électrique principal 68 uniquement avec la première source d'énergie électrique principale 65. Le contrôleur 76 ferme ainsi le premier contacteur principal K11. En parallèle, le moteur supplémentaire 12 peut être à l'arrêt ou en panne par exemple.

Le contrôleur 76 est aussi configuré, durant une étape STPA2, pour alimenter électriquement le deuxième bobinage 62 via le deuxième convertisseur électrique principal 72 uniquement avec la deuxième source d'énergie électrique principale DCGEN. Le contrôleur 76 ferme ainsi le deuxième contacteur principal K15, le troisième contacteur principal K13 et le sixième contacteur K14.

Dès lors, le contrôleur 76 est aussi configuré pour commander la machine électrique principale FSG pour la faire fonctionner en mode moteur MOT.

Eventuellement, le contrôleur 76 est aussi configuré pour ouvrir le quatrième contacteur principal K12 et le cinquième contacteur principal KP afin de ségréger la première source d'énergie électrique principale 65 et la deuxième source d'énergie électrique principale DCGEN.

Dans ces conditions, le redémarrage rapide du moteur principal 11 est obtenu en utilisant deux sources différentes d'énergie électrique 65, DCGEN pour respectivement alimenter électriquement deux convertisseurs électriques 68, 72.

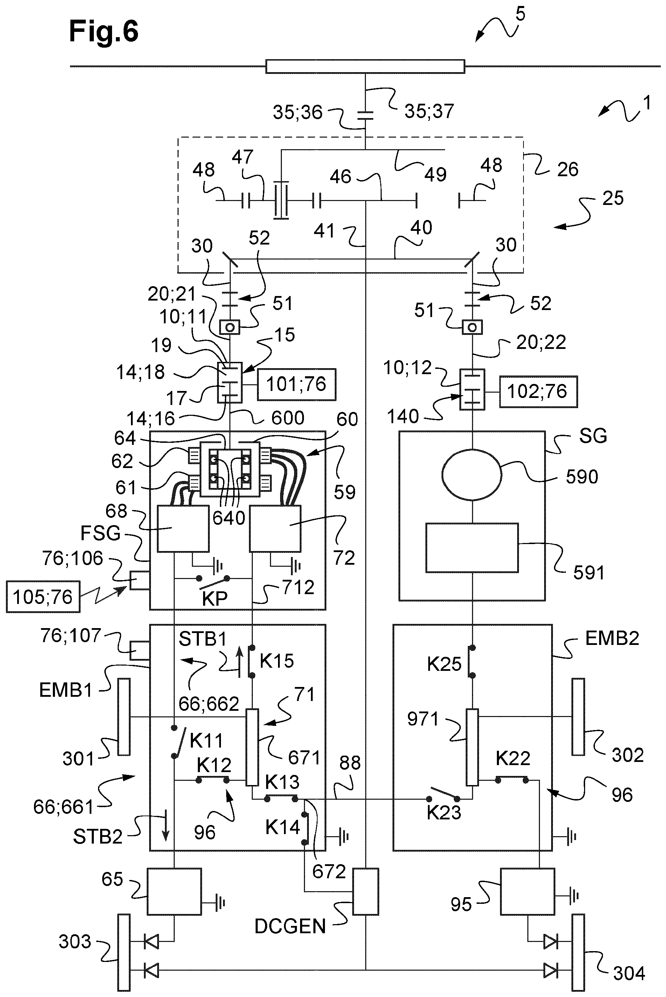

La figure 6 illustre le système 55 de démarrage et de génération électrique de la première variante lors d'un mode de veille MODVEIL.

Durant ce mode de veille MODVEIL, le contrôleur 76 est configuré, durant une étape STPB1, pour alimenter électriquement le deuxième bobinage 62 via le deuxième convertisseur électrique principal 72 uniquement avec la deuxième source d'énergie électrique principale DCGEN. Le contrôleur 76 ferme ainsi le deuxième contacteur principal K15, le troisième contacteur principal K13 et le sixième contacteur K14, et ouvre le premier contacteur principal K11 ainsi que le cinquième contacteur principal KP. Dès lors, le contrôleur 76 est aussi configuré pour commander la machine électrique principale FSG pour la faire fonctionner en mode moteur MOT, par exemple pour maintenir l'ensemble mobile principal 14 à une vitesse de rotation prédéterminée, la chambre de combustion 17 étant éteinte ou alimentée en carburant. En parallèle, le moteur supplémentaire 12 peut fonctionner normalement pour mettre en mouvement le système mécanique 25, et la machine électrique supplémentaire SG peut fonctionner en mode générateur MODGEN.

Le contrôleur 76 est aussi configuré, durant une étape STPB2, pour maintenir en charge la première source d'énergie électrique principale 65 en alimentant électriquement la première liaison électrique 66 avec la deuxième source d'énergie électrique principale DCGEN. Le contrôleur 76 ferme ainsi le quatrième contacteur principal K12.

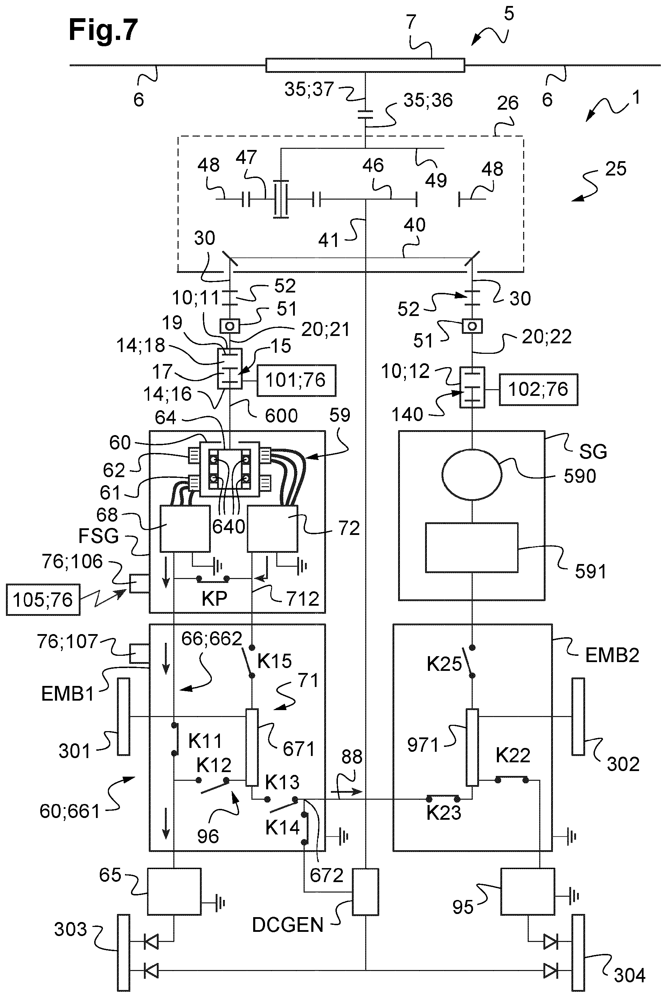

La figure 7 illustre le système 55 de démarrage et de génération électrique de la première variante lors d'un mode producteur d'énergie électrique MODPROP.

Durant ce mode producteur d'énergie électrique MODPROP, le contrôleur 76 est configuré, durant une étape STPC1, pour déconnecter électriquement la deuxième source d'énergie électrique principale DCGEN de la machine électrique principale FSG. Le contrôleur 76 ouvre ainsi le deuxième contacteur principal K15 et le troisième contacteur principal K13.

Le contrôleur 76 est aussi configuré, durant une étape STPC2, pour connecter électriquement en parallèle le deuxième convertisseur électrique principal 72 au premier convertisseur électrique principal 68, et les relier à la première source d'énergie électrique principale 65. Le contrôleur 76 ferme ainsi le cinquième contacteur principal KP et le premier contacteur principal K11, et ouvre le quatrième contacteur principal K12. Le contrôleur 76 ferme éventuellement le sixième contacteur K14 et le troisième contacteur supplémentaire K23.

Dès lors, le contrôleur 76 est aussi configuré pour commander la machine électrique principale FSG pour la faire fonctionner en mode générateur GEN. Les premier et deuxième convertisseurs électriques principaux 68, 72 délivrent alors une énergie électrique à la première liaison électrique principale 66. La deuxième source d'énergie électrique principale DCGEN alimente électriquement le réseau de bord essentiel 303.

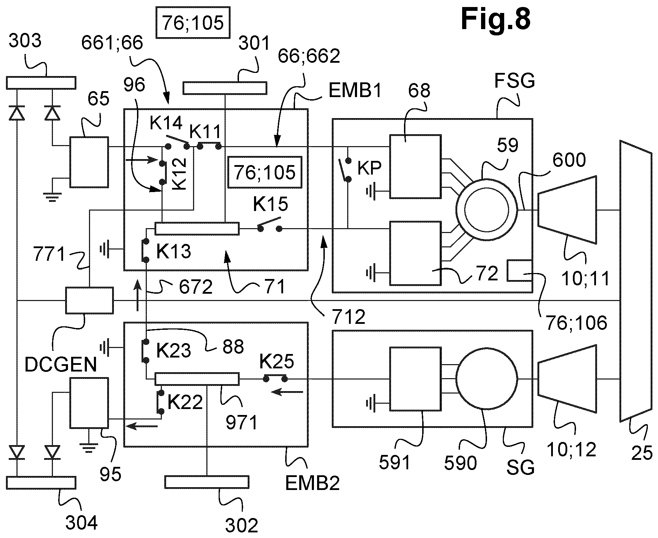

Les figures 8 à 10 illustrent une deuxième variante.

Par rapport à la première variante, le sixième contacteur K14 est déplacé. Selon la deuxième variante et en référence à la figure 8, la première liaison filaire amont 661 comporte le sixième contacteur K14, la liaison électrique transverse 96 étant reliée à la première liaison filaire amont 661 entre la première source d'énergie électrique principale 65 et ce sixième contacteur K14.

En outre, le troisième contacteur principal K13 est agencé entre le bus principal 671 et la liaison électrique complémentaire 88.

Enfin, une liaison électrique filaire intermédiaire s'étend de la deuxième liaison filaire amont 711 à la première liaison filaire amont 661, entre le sixième contacteur K14 et le premier contacteur principal K11. Par exemple, la deuxième liaison filaire amont 711 comporte une connexion, entre le bus principal 671 et la deuxième source d'énergie électrique principale DCGEN, connectée à la liaison électrique transverse 96 et à la liaison électrique filaire intermédiaire.

Durant le mode de veille MODVEIL illustré sur la figure 8, le contrôleur 76 est configuré pour alimenter électriquement le premier bobinage 61 via le premier convertisseur électrique principal 68 avec la deuxième source d'énergie électrique principale DCGEN. Le contrôleur 76 ferme ainsi le premier contacteur principal K11 et ouvre le deuxième contacteur principal K15, le sixième contacteur K14, et le cinquième contacteur principal KP.

Dès lors, le contrôleur 76 est aussi configuré pour commander la machine électrique principale FSG afin de la faire fonctionner en mode moteur MOT, par exemple pour maintenir l'ensemble mobile principal 14 à une vitesse de rotation prédéterminée, la chambre de combustion 17 étant éteinte ou alimentée en carburant. En parallèle, le moteur supplémentaire 12 peut fonctionner normalement pour mettre en mouvement le système mécanique 25, et la machine électrique supplémentaire SG peut fonctionner en mode générateur MODGEN.

Le contrôleur 76 est aussi configuré pour maintenir en charge la première source d'énergie électrique principale 65 en alimentant électriquement la première liaison électrique 66 avec la deuxième source d'énergie électrique principale DCGEN. Le contrôleur 76 ferme ainsi le quatrième contacteur principal K12. Eventuellement, le contrôleur 76 ferme aussi le troisième contacteur principal K13.

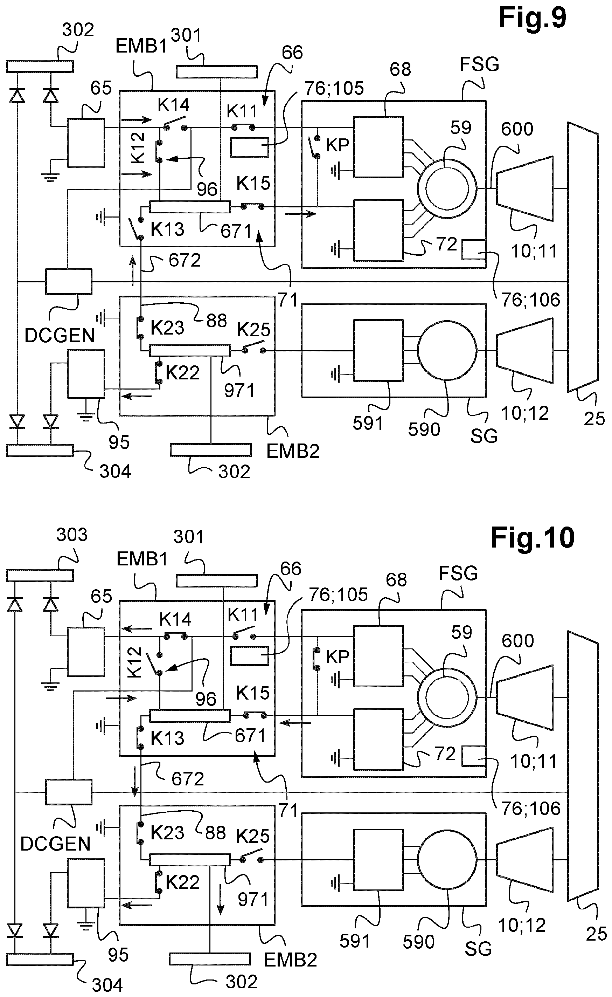

La figure 9 illustre le système 55 de démarrage et de génération électrique de la deuxième variante lors d'un mode de démarrage MODRAP. Le contrôleur 76 est configuré pour alimenter électriquement le premier bobinage 61 via le premier convertisseur électrique principal 68 avec la première source d'énergie électrique principale 65 et la deuxième source d'énergie électrique principale DCGEN, et pour alimenter électriquement le deuxième bobinage 62 via le deuxième convertisseur électrique principal 72 avec la première source d'énergie électrique principale 65 et la deuxième source d'énergie électrique principale DCGEN.

Le contrôleur 76 ferme ainsi le premier contacteur principal K11, le quatrième contacteur principal K12 et le deuxième contacteur principal K15. En parallèle, le contrôleur 76 ouvre le troisième contacteur principal K13, le sixième contacteur K14 et le cinquième contacteur principal KP.

La figure 10 illustre le système 55 de démarrage et de génération électrique de la deuxième variante lors d'un mode producteur d'énergie électrique MODPROP.

Durant ce mode producteur d'énergie électrique MODPROP, le contrôleur 76 est configuré pour connecter électriquement en série le deuxième convertisseur électrique principal 72 au premier convertisseur électrique principal 68, et les relier à la première source d'énergie électrique principale 65. De même, la deuxième source d'énergie électrique principale DCGEN peut alimenter électriquement le réseau électrique de bord secondaire 301. Le contrôleur 76 ferme ainsi le cinquième contacteur principal KP, le deuxième contacteur principal K15, le sixième contacteur K14, voire le troisième contacteur principal K13, et ouvre le quatrième contacteur principal K12 et le premier contacteur principal K11.

Ainsi, le réseau électrique de bord secondaire 301 et la première source d'énergie électrique principale 65 peuvent être alimentés électriquement par les convertisseurs 68, 72 et la deuxième source d'énergie électrique principale DCGEN.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

## Revendications

1. Système (55) de démarrage et de génération électrique pour un moteur principal (11) à combustion d'un aéronef (1), le système (55) de démarrage et de génération électrique comprenant une génératrice-démarreur (FSG) munie d'un arbre de transmission (600), la génératrice-démarreur (FSG) pouvant fonctionner selon un mode moteur (MOT) pour mettre en mouvement un ensemble mobile principal (14) du moteur principal (11) avec l'arbre de transmission (600) et un mode générateur (GEN) pour générer une énergie électrique en ayant l'arbre de transmission (600) mis en mouvement par ledit ensemble mobile principal (14), la génératrice-démarreur (FSG) comportant un premier bobinage (61) et un deuxième bobinage (62) polyphasés générant des champs magnétiques pour créer des couples moteurs respectifs mettant en mouvement conjointement l'arbre de transmission (600) dans un mode de démarrage du mode moteur (MOT), le système (55) de démarrage et de génération électrique comportant une première source d'énergie électrique principale (65) reliée sur commande par une première liaison électrique (66) au moins à un premier convertisseur électrique principal (68) relié électriquement au premier bobinage (61) et une deuxième source d'énergie électrique principale (DCGEN) reliée sur commande par une deuxième liaison électrique (71) au moins à un deuxième convertisseur électrique principal (72) relié électriquement au deuxième bobinage (62),
**caractérisé en ce que** le système (55) de démarrage et de génération électrique comporte un gestionnaire (75) configuré pour :
- dans le mode de démarrage (MODRAP), alimenter électriquement le premier bobinage (61) via le premier convertisseur électrique principal (68) avec au moins la première source d'énergie électrique principale (65), alimenter électriquement le deuxième bobinage (62) via le deuxième convertisseur électrique principal (72) avec au moins la deuxième source d'énergie électrique principale (DCGEN),
- dans un mode de veille (MODVEIL), alimenter un des premier bobinage (61) et deuxième bobinage (62) avec la deuxième source d'énergie électrique principale (DCGEN), maintenir en charge la première source d'énergie électrique principale (65) via une liaison électrique transverse (96) reliée à la deuxième liaison électrique (71),
- dans un mode producteur d'énergie électrique (MODPROD), connecter électriquement en parallèle le deuxième convertisseur électrique principal (72) et le premier convertisseur électrique principal (68) pour alimenter électriquement la première source d'énergie électrique principale (65).

2. Système de démarrage et de génération électrique selon la revendication 1,
**caractérisé en ce que** la première source d'énergie électrique principale (65) n'est pas régulée en tension électrique et la deuxième source d'énergie électrique principale (DCGEN) est régulée en tension électrique ou la première source d'énergie électrique principale (65) et la deuxième source d'énergie électrique principale (DCGEN) sont régulées à des tensions électriques différentes.

3. Système de démarrage et de génération électrique selon l'une quelconque des revendications 1 à 2,
**caractérisé en ce que** la première source d'énergie électrique principale (65) comporte au moins une batterie électrique ou une pile thermique ou une supercapacité.

4. Système de démarrage et de génération électrique selon l'une quelconque des revendications 1 à 3,
**caractérisé en ce que** la deuxième source d'énergie électrique principale (DCGEN) comporte un générateur électrique régulé en tension électrique et configuré pour être mécaniquement mis en mouvement par un système mécanique.

5. Système de démarrage et de génération électrique selon l'une quelconque des revendications 1 à 4,
**caractérisé en ce que** la génératrice/démarreur (FSG) comporte une machine électrique ayant un stator muni du premier bobinage (61) et du deuxième bobinage (62) qui sont polyphasés ainsi qu'à neutre flottants et galvaniquement isolés l'un de l'autre, la machine électrique comportant un rotor (64) à aimants permanents enterrés avec réluctance variable solidaire en rotation de l'arbre de transmission.

6. Système de démarrage et de génération électrique selon l'une quelconque des revendications 1 à 4,
**caractérisé en ce que** la génératrice/démarreur (FSG) comporte une double machine électrique à excitations séparées (110), la double machine électrique à excitations séparées (110) comportant un stator (111) muni du premier bobinage (61) et du deuxième bobinage (62), la double machine électrique à excitations séparées (110) comportant un rotor (112) muni de deux bobinages rotoriques reliés électriquement à un collecteur électrique à balais (115).

7. Système de démarrage et de génération électrique selon l'une quelconque des revendications 1 à 4,
**caractérisé en ce que** la génératrice/démarreur (FSG) comporte un démarreur à aimant (120) et une machine électrique (125) fonctionnant en mode générateur et en mode moteur, le démarreur à aimant (120) étant muni d'un premier stator ayant le premier bobinage (61) et d'un premier rotor ( 122) qui est relié mécaniquement à l'arbre de transmission (600) par une roue libre (123), la machine électrique comprenant un deuxième stator (126) muni du deuxième bobinage (62) et d'un deuxième rotor (127) solidaire de l'arbre de transmission (600), la machine électrique pouvant être une machine électrique à excitation séparée ou asynchrone.

8. Système de démarrage et de génération électrique selon l'une quelconque des revendications 1 à 4,
**caractérisé en ce que** la génératrice/démarreur (FSG) comporte une double machine électrique asynchrone (130) comportant un stator muni du premier bobinage (61) et du deuxième bobinage (62).

9. Système de démarrage et de génération électrique selon l'une quelconque des revendications 1 à 4,
**caractérisé en ce que** la génératrice/démarreur (FSG) comporte une machine électrique à excitation séparée comprenant un stator ayant un bobinage parmi le premier bobinage (61) et le deuxième bobinage (62) et une machine électrique asynchrone comprenant un stator ayant l'autre bobinage parmi le premier bobinage (61) et le deuxième bobinage (62).

10. Système de démarrage et de génération électrique selon l'une quelconque des revendications 1 à 9,
**caractérisé en ce que** la deuxième liaison électrique (71) comprend un bus principal (671), et le gestionnaire (75) comporte :
- un contrôleur (76),
- un premier contacteur principal (K11) commandé par le contrôleur (76) et agencé sur la première liaison électrique (66),
- un deuxième contacteur principal (K15) commandé par le contrôleur (76) et agencé sur la deuxième liaison électrique (71) entre le bus principal (671) et le deuxième convertisseur électrique principal (72).

11. Système de démarrage et de génération électrique selon la revendication 10,
**caractérisé en ce que** le gestionnaire (75) comporte :
- un troisième contacteur principal (K13) commandé par le contrôleur (76) et agencé entre le bus principal (671) et une connexion (672) configurée pour être reliée électriquement à une liaison électrique complémentaire (88) d'un circuit électrique supplémentaire,
- un quatrième contacteur principal (K12) commandé par le contrôleur (76) et agencé sur une liaison électrique transverse (96), la liaison électrique transverse (96) s'étend de la deuxième liaison électrique (71) jusqu'à la première liaison électrique (66) entre le premier contacteur principal (K11) et la première source d'énergie électrique principale (65) ,
- un cinquième contacteur principal (KP) commandé par le contrôleur (76) et agencé sur une ligne électrique reliant la première liaison électrique (66) et la deuxième liaison électrique (71) entre d'une part le deuxième contacteur principal (K15) et le deuxième convertisseur électrique principal (72) et d'autre part entre le premier contacteur principal (K11) et le premier convertisseur électrique principal (68).

12. Aéronef (1) muni d'un moteur principal (11) à combustion et d'au moins un moteur supplémentaire (12) à combustion connectés à un système mécanique (25) mettant en mouvement au moins une voilure tournante (5) ou un rotor ou une hélice, le moteur supplémentaire (12) étant connecté à une machine électrique supplémentaire (SG) pouvant fonctionner selon un mode moteur (MOT) pour mettre en mouvement un ensemble mobile supplémentaire (140) du moteur supplémentaire (12) et un mode générateur (GEN) pour générer une énergie électrique en étant mis en mouvement par ledit ensemble mobile supplémentaire (140), la machine électrique supplémentaire (SG) étant reliée électriquement à un convertisseur électrique supplémentaire (FSG1) qui est relié par une liaison électrique supplémentaire (98) à une source d'énergie électrique supplémentaire (95),
**caractérisé en ce que** ledit aéronef comporte un système (55) de démarrage et de génération électrique selon l'une quelconque des revendications 1 à 11 pour le moteur principal (11).

13. Aéronef selon la revendication 12,
**caractérisé en ce que** le système mécanique (25) comprenant une boîte de transmission de puissance (26) connectée au moteur principal (11) et au moteur supplémentaire (12), la deuxième source d'énergie électrique principale (DCGEN) est mise en mouvement par la boîte de transmission de puissance (26).

14. Procédé de démarrage d'un moteur à combustion et de génération d'énergie électrique avec un système (55) de démarrage et de génération électrique selon l'une quelconque des revendications 1 à 11,
**caractérisé en ce que** le procédé comporte :
- un mode de démarrage (MODRAP) comportant les étapes suivantes : alimenter (STPA1) électriquement le premier bobinage (61) via le premier convertisseur électrique principal (68) avec au moins la première source d'énergie électrique principale (65), alimenter (STPA2) électriquement le deuxième bobinage (62) via le deuxième convertisseur électrique principal (72) avec au moins la deuxième source d'énergie électrique principale (DCGEN),
- un mode de veille (MODVEIL) comportant les étapes suivantes : alimenter (STPB1) un des premier bobinage (61) et deuxième bobinage (62) avec la deuxième source d'énergie électrique principale (DCGEN) et maintenir (STPB2) en charge la première source d'énergie électrique principale (65) via une liaison électrique transverse (96) reliée à la deuxième liaison électrique (71),
- un mode producteur d'énergie électrique (MODPROD) comportant les étapes suivantes : connecter (STPC2) électriquement en parallèle le deuxième convertisseur électrique principal (72) et le premier convertisseur électrique principal (68) et les relier à la première source d'énergie électrique principale (65).

## Patentansprüche

1. Anlasser- und Stromerzeugungssystem (55) für einen Hauptverbrennungsmotor (11) eines Luftfahrzeugs (1), wobei das Anlasser- und Stromerzeugungssystem (55) einen Startergenerator (FSG) umfasst, der mit einer Antriebswelle (600) ausgestattet ist, wobei der Startergenerator (FSG) in einem Motorbetrieb (MOT) betreibbar ist, um eine Hauptbewegungsbaugruppe (14) des Hauptmotors (11) über die Antriebswelle (600) in Bewegung zu versetzen, sowie in einem Generatorbetrieb (GEN) betreibbar ist, um elektrische Energie zu erzeugen, indem die Antriebswelle (600) durch die genannte Hauptbewegungsbaugruppe (14) in Bewegung versetzt wird, wobei der Startergenerator (FSG) eine erste (61) und eine zweite (62) mehrphasige Wicklung aufweist, die Magnetfelder erzeugen, um in einem Anlassermodus des Motorbetriebs (MOT) jeweilige Antriebsmomente zu erzeugen, die gemeinsam die Antriebswelle (600) in Bewegung versetzen, wobei das Anlasser - und Stromerzeugungssystem (55) eine erste Hauptstromquelle (65), die auf Befehl über eine erste elektrische Verbindung (66) mit mindestens einem ersten Hauptstromrichter (68) verbunden ist, der elektrisch mit der ersten Wicklung (61) verbunden ist, sowie eine zweite Hauptstromquelle (DCGEN) umfasst, die auf Befehl über eine zweite elektrische Verbindung (71) mit mindestens einem zweiten Hauptstromrichter (72) verbunden ist, der elektrisch mit der zweiten Wicklung (62) verbunden ist,
**dadurch gekennzeichnet, dass** das Anlasser- und Stromerzeugungssystem (55) eine Steuereinheit (75) umfasst, die konfiguriert ist, um:
- im Startmodus (MODRAP) die erste Wicklung (61) über den ersten Hauptstromrichter (68) von mindestens der ersten Hauptstromquelle (65) aus mit Strom zu versorgen, und die zweite Wicklung (62) über den zweiten Hauptstromrichter (72) von mindestens der zweiten Hauptstromquelle (DCGEN) aus mit Strom zu versorgen,
- im Standby-Modus (MODVEIL) entweder die erste Wicklung (61) oder die zweite Wicklung (62) von der zweiten Hauptstromquelle (DCGEN) aus mit Strom zu versorgen und die erste Hauptstromquelle (65) über eine Querverbindung (96), die mit der zweiten elektrischen Verbindung (71) verbunden ist, geladen zu halten,
- in einem Stromerzeugungsmodus (MODPROD) den zweiten Hauptstromrichter (72) und den ersten Hauptstromrichter (68) elektrisch parallel zu schalten, um die erste Hauptstromquelle (65) mit Strom zu versorgen.

2. Anlasser- und Stromerzeugungssystem nach Anspruch 1,
**dadurch gekennzeichnet, dass** die erste Hauptstromquelle (65) nicht spannungsgeregelt ist und die zweite Hauptstromquelle (DCGEN) spannungsgeregelt ist oder dass die erste Hauptstromquelle (65) und die zweite Hauptstromquelle (DCGEN) auf unterschiedliche Spannungen geregelt sind.

3. Anlasser- und Stromerzeugungssystem nach einem der Ansprüche 1 bis 2,
**dadurch gekennzeichnet, dass** die erste elektrische Hauptstromquelle (65) mindestens eine elektrische Batterie oder eine thermische Zelle oder einen Superkondensator umfasst.

4. Anlasser- und Stromerzeugungssystem nach einem der Ansprüche 1 bis 3,
**dadurch gekennzeichnet, dass** die zweite Hauptstromquelle (DCGEN) einen spannungsgeregelten elektrischen Generator umfasst, der konfiguriert ist, um durch ein mechanisches System mechanisch in Bewegung gesetzt zu werden.

5. Anlasser- und Stromerzeugungssystem nach einem der Ansprüche 1 bis 4,
**dadurch gekennzeichnet, dass** der Startergenerator (FSG) eine elektrische Maschine mit einem Stator umfasst, der die erste Wicklung (61) und die zweite Wicklung (62) aufweist, die mehrphasig sowie mit schwimmendem Sternpunkt ausgebildet und galvanisch voneinander isoliert sind, und dass die elektrische Maschine einen Rotor (64) mit eingebetteten Permanentmagneten und variabler Reluktanz aufweist, der drehfest mit der Antriebswelle verbunden ist.

6. Anlasser- und Stromerzeugungssystem nach einem der Ansprüche 1 bis 4,
**dadurch gekennzeichnet, dass** der Startergenerator (FSG) eine doppelte elektrische Maschine mit getrennter Erregung (110) umfasst, wobei die doppelte elektrische Maschine mit getrennter Erregung (110) einen Stator (111) umfasst, der die erste Wicklung (61) und die zweite Wicklung (62) aufweist, und dass die doppelte elektrische Maschine mit getrennter Erregung (110) einen Rotor (112) umfasst, der zwei Rotorwicklungen aufweist, die mit einem elektrischen Kollektor mit Bürsten (115) elektrisch verbunden sind.

7. Anlasser- und Stromerzeugungssystem nach einem der Ansprüche 1 bis 4,
**dadurch gekennzeichnet, dass** der Startergenerator (FSG) einen Magnetanlasser (120) und eine elektrische Maschine (125) umfasst, die im Generator- und im Motorbetrieb arbeitet, dass der Magnetanlasser (120) einen ersten Stator, der die erste Wicklung (61) aufweist, sowie einen ersten Rotor (122) umfasst, der über einen Freilauf (123) mechanisch mit der Antriebswelle (600) verbunden ist, dass die elektrische Maschine einen zweiten Stator (126), der die zweite Wicklung (62) aufweist, und einen zweiten Rotor (127) umfasst, der fest mit der Antriebswelle (600) verbunden ist, wobei die elektrische Maschine eine separat erregte oder eine Asynchronmaschine sein kann.

8. Anlasser- und Stromerzeugungssystem nach einem der Ansprüche 1 bis 4,
**dadurch gekennzeichnet, dass** der Startergenerator (FSG) eine doppelte Asynchronmaschine (130) umfasst, die einen Stator umfasst, der die erste Wicklung (61) und die zweite Wicklung (62) aufweist.

9. Anlasser- und Stromerzeugungssystem nach einem der Ansprüche 1 bis 4,
**dadurch gekennzeichnet, dass** der Startergenerator (FSG) eine elektrische Maschine mit getrennter Erregung, von der ein Stator entweder die erste Wicklung (61) oder die zweite Wicklung (62) aufweist, sowie eine elektrische Asynchronmaschine umfasst, von der ein Stator die jeweils andere der ersten Wicklung (61) und der zweiten Wicklung (62) aufweist.

10. Anlasser- und Stromerzeugungssystem nach einem der Ansprüche 1 bis 9,
**dadurch gekennzeichnet, dass** die zweite elektrische Verbindung (71) einen Hauptbus (671) umfasst und die Steuereinheit (75) umfasst:
eine Steuerung (76),
- ein erstes Hauptschütz (K11), das von der Steuerung (76) angesteuert wird und an der ersten elektrischen Verbindung (66) angeordnet ist,
- ein zweites Hauptschütz (K15), das von der Steuerung (76) angesteuert wird und an der zweiten elektrischen Verbindung (71) zwischen dem Hauptbus (671) und dem zweiten Hauptstromrichter (72) angeordnet ist.

11. Anlasser- und Stromerzeugungssystem nach Anspruch 10,
**dadurch gekennzeichnet, dass** die Steuereinheit (75) umfasst:
- ein drittes Hauptschütz (K13), das von der Steuerung (76) angesteuert wird und zwischen dem Hauptbus (671) und einem Anschluss (672) angeordnet ist, der konfiguriert ist, um mit einer zusätzlichen elektrischen Verbindung (88) eines weiteren Stromkreises elektrisch verbunden zu werden,
- ein viertes Hauptschütz (K12), das von der Steuerung (76) angesteuert wird und an einer elektrischen Querverbindung (96) angeordnet ist, wobei sich die elektrische Querverbindung (96) von der zweiten elektrischen Verbindung (71) bis zur ersten elektrischen Verbindung (66) zwischen dem ersten Hauptschütz (K11) und der ersten Hauptstromquelle (65) erstreckt,
- ein fünftes Hauptschütz (KP), das von der Steuerung (76) angesteuert wird und an einer elektrischen Leitung angeordnet ist, die die erste elektrische Verbindung (66) und die zweite elektrische Verbindung (71) zwischen einerseits dem zweiten Hauptschütz (K15) und dem zweiten Hauptstromrichter (72) sowie andererseits zwischen dem ersten Hauptschütz (K11) und dem ersten elektrischen Hauptstromrichter (68) verbindet.

12. Luftfahrzeug (1), das mit einem Hauptverbrennungsmotor (11) und mindestens einem Zusatzverbrennungsmotor (12) ausgestattet ist, die an ein mechanisches System (25) angeschlossen sind, das mindestens einen Drehflügel (5) oder einen Rotor oder einen Propeller in Bewegung versetzt, wobei der Zusatzverbrennungsmotor (12) mit einer elektrischen Zusatzmaschine (SG) verbunden ist, die in einem Motorbetrieb (MOT) betreibbar ist, um eine zusätzliche bewegliche Baugruppe (140) des Zusatzverbrennungsmotors (12) anzutreiben, sowie in einem Generatorbetrieb (GEN) betreibbar ist, um elektrische Energie zu erzeugen, wenn sie durch die zusätzliche bewegliche Baugruppe (140) angetrieben wird, wobei die zusätzliche elektrische Maschine (SG) mit einem zusätzlichen Stromrichter (FSG1) elektrisch verbunden ist, der über eine zusätzliche elektrische Verbindung (98) mit einer zusätzlichen Stromquelle (95) verbunden ist,
**dadurch gekennzeichnet, dass** das Luftfahrzeug ein Anlasser- und Stromerzeugungssystem (55) nach einem der Ansprüche 1 bis 11 für den Hauptmotor (11) umfasst.

13. Luftfahrzeug nach Anspruch 12,
**dadurch gekennzeichnet, dass** das mechanische System (25) ein mit dem Hauptmotor (11) und dem Zusatzmotor (12) verbundenes Kraftübertragungsgetriebe (26) umfasst, und dass die zweite elektrische Hauptenergiequelle (DCGEN) durch das Kraftübertragungsgetriebe (26) angetrieben ist.

14. Verfahren zum Anlassen eines Verbrennungsmotors und zum Erzeugen von elektrischer Energie mit einem Anlasser- und Stromerzeugungssystem (55) nach einem der Ansprüche 1 bis 11,
**dadurch gekennzeichnet, dass** das Verfahren umfasst:
- einen Startmodus (MODRAP) mit den folgenden Schritten: Stromversorgen (STPA1) der ersten Wicklung (61) über den ersten Hauptstromrichter (68) von mindestens der ersten Hauptstromquelle (65) aus, Stromversorgen (STPA2) der zweiten Wicklung (62) über den zweiten Hauptstromrichter (72) von mindestens der zweiten Hauptstromquelle (DCGEN) aus,
- einen Standby-Modus (MODVEIL) mit den folgenden Schritten: Versorgen (STPB1) der ersten Wicklung (61) und der zweiten Wicklung (62) von der zweiten Hauptstromquelle (DCGEN) aus und Aufrechterhalten (STPB2) des Ladezustands der ersten Hauptstromquelle (65) über eine Querverbindung (96), die mit der zweiten elektrischen Verbindung (71) verbunden ist,
- einen Stromerzeugungsmodus (MODPROD) mit den folgenden Schritten: elektrisches Parallelschalten (STPC2) des zweiten Hauptstromrichters (72) und des ersten Hauptstromrichters (68) sowie Anschließen derselben an die erste Hauptstromquelle (65).

## Claims

1. Start-up and electrical generation system (55) for a main combustion engine (11) of an aircraft (1), the start-up and electrical generation system (55) comprising a start-up generator (FSG) provided with a transmission shaft (600), the start-up generator (FSG) being able to operation according to an engine mode (MOT) to move a main mobile assembly (14) of the main engine (11) with the transmission shaft (600) and a generator mode (GEN) for generating an electrical energy by having transmission shaft (600) moved by said main mobile assembly (14), the start-up generator (FSG) comprising a first polyphase coil (61) and a second polyphase coil (62) generating magnetic fields to create respective engine torques, jointly moving the transmission shaft (600) in a start-up mode of the engine mode (MOT), the start-up and electrical generation system (55) comprising a first main electrical energy source (65) electrically connected, on command, by a first electrical connection (66) to at least one first main electrical converter (68) electrically connected to the first coil (61) and a second main electrical energy (DCGEN) connected, on command, by a second electrical connection (71) at least to a second main electrical converter (72) electrically connected to the second coil (62),
**characterised in that** the start-up and electrical generation system (55) comprises a manager (75) configured to:
- in the start-up mode (MODRAP), electrically supply the first coil (61) via the first main electrical converter (68) with at least the first main electrical energy source (65), electrically supply the second coil (62) via the second main electrical converter (72) with at least the second main electrical energy source (DCGEN),
- in a standby mode (MODVEIL), supply one of the first coil (61) and second coil (62) with the second main electrical energy source (DCGEN), keeping the first main electrical energy source (65) charged via a transverse electrical connection (96) connected to the second electrical connection (71),
- in an electrical energy-producing mode (MODPROD), electrically connect, in parallel, the second main electrical converter (72) and the first main electrical converter (68) to electrically supply the first main electrical energy source (65).

2. Start-up and electrical generation system according to claim 1,
**characterised in that** the first main electrical energy source (65) is not regulated in electrical voltage and the second main electrical energy source (DCGEN) is regulated in electrical voltage or the first main electrical energy source (65) and the second main electrical energy source (DCGEN) are regulated at different electrical voltages.

3. Start-up and electrical generation system according to any one of claims 1 to 2,
**characterised in that** the first main electrical energy source (65) comprises at least one electrical battery or a molten salt battery or a supercapacity.

4. Start-up and electrical generation system according to any one of claims 1 to 3,
**characterised in that** the second main electrical energy source (DCGEN) comprises an electrical generator regulated in electrical voltage and configured to be mechanically moved by a mechanical system.

5. Start-up and electrical generation system according to any one of claims 1 to 4,
**characterised in that** the generator/starter (FSG) comprises an electrical machine having a stator provided with the first coil (61) and the second coil (62) which are polyphase, as well as neutral, floating and galvanically insulated from one another, the electrical machine comprising a rotor (64) with buried permanent magnets with integral variable reluctance, rotating the transmission shaft.

6. Start-up and electrical generation system according to any one of claims 1 to 4,
**characterised in that** the generator/starter (FSG) comprises a dual electrical machine with separated excitations (110), the dual electrical machine with separated excitations (110) comprising a stator (111) provided with the first coil (61) and the second coil (62), the dual electrical machine with separated excitations (110) comprising a rotor (112) provided with two rotor coils, electrically connected to a brushed electrical commutator (115).

7. Start-up and electrical generation system according to any one of claims 1 to 4, **characterised in that** the generator/starter (FSG) comprises a magnet starter (120) and an electrical machine (125) operating in generator mode and in engine mode, the magnet starter (120) being provided with a first stator having the first coil (61) and with a first rotor (122) which is mechanically connected to the transmission shaft (600) by a free wheel (123), the electrical machine comprising a second stator (126) provided with the second coil (62) and with a second rotor (127) integral with the transmission shaft (600) the electrical machine being able to be an electrical machine with separated or asynchronous excitation.

8. Start-up and electrical generation system according to any one of claims 1 to 4,
**characterised in that** the generator/starter (FSG) comprises a dual asynchronous electrical machine (130) comprising a stator provided with the first coil (61) and with the second coil (62).

9. Start-up and electrical generation system according to any one of claims 1 to 4,
**characterised in that** the generator/starter (FSG) comprises an electrical machine with separated excitation comprising a stator having a coil from among the first coil (61) and the second coil (62) and an asynchronous electrical machine comprising a stator having the other coil from among the first coil (61) and the second coil (62).

10. Start-up and electrical generation system according to any one of claims 1 to 9,
**characterised in that** the second electrical connection (71) comprises a main bus (671), and the manager (75) comprises:
- a controller (76),
- a first main contactor (K11) controlled by the controller (76) and arranged on the first electrical connection (66),
- a second main contactor (K15) controlled by the controller (76) and arranged on the second electrical connection (71) between the main bus (671) and the second main electrical converter (72).

11. Start-up and electrical generation system according to claim 10,
**characterised in that** the manager (75) comprises:
- a third main contactor (K13) controlled by the controller (76) and arranged between the main bus (671) and a connection (672) configured to be electrically connected to a complementary electrical connection (88) of an additional electrical circuit, - a fourth main contactor (K12) controlled by the controller (76) and arranged on a transverse electrical connection (96), the transverse electrical connection (96) extends from the second electrical connection (71) to the first electrical connection (66) between the first main contactor (K11) and the first main electrical energy source (65),
- a fifth main contactor (KP) controlled by the controller (76) and arranged on an electrical line connecting the first electrical connection (66) and the second electrical connection (71) between, on the one hand, the second main contactor (K15) and the second main electrical converter (72) and, on the other hand, the first main contactor (K11) and the first main electrical converter (68).

12. Aircraft (1) provided with a main combustion engine (11) and with at least one additional combustion engine (12) connected to a mechanical system (25) moving at least one rotating airfoil (5) or a rotor or a propeller, the additional engine (12) being connected to an additional electrical machine (SG) being able to operate according to an engine mode (MOT) to move an additional mobile assembly (140) of the additional engine (12) and a generator mode (GEN) to generate an electrical energy by being moved by said additional mobile assembly (140), the additional electrical machine (SG) being electrically connected to an additional electrical converter (FSG1), which is connected by an additional electrical connection (98) to an additional electrical energy source (95),
**characterised in that** said aircraft comprises a start-up and electrical generation system (55) according to any one of claims 1 to 11 for the main engine (11).

13. Aircraft according to claim 12,
**characterised in that** the mechanical system (25) comprising a power transmission gearbox (26) connected to the main engine (11) and to the additional engine (12), the second main electrical energy source (DCGEN) is moved by the power transmission gearbox (26).

14. Method for starting up a combustion engine and for generating electrical energy with a start-up and electrical generation system (55) according to any one of claims 1 to 11,
**characterised in that** the method comprises:
- a start-up mode (MODRAP), comprising the following steps: electrically supplying (STPA1) the first coil (61) via the first main electrical converter (68) with at least the first main electrical energy source (65), electrically supplying (STPA2) the second coil (62) via the second main electrical converter (72) with at least the second main electrical energy source (DCGEN),
- a standby mode (MODVEIL), comprising the following steps:
supplying (STPB1) one of the first coil (61) and second coil (62) with the second main electrical energy source (DCGEN) and keeping the first main electrical energy source (65) charged (STPB2) via a transverse electrical connection (96) connected to the second electrical connection (71),
- an electrical energy-producing mode (MODPROD), comprising the following steps: electrically connecting (STPC2), in parallel, the second main electrical converter (72) and the first main electrical converter (68) and connecting them to the first main electrical energy source (65).
